# EUROPEAN PATENT APPLICATION

(11) **EP 1 835 636 A2**
(43) Date of publication of application: **19.09.2007**
(21) Application number: 07251107.4
(22) Date of filing: 15.03.2007
(51) Int. Cl.: H04B 7/005

(54) **Wireless communications system base station measurement apparatus and wireless parameter control method**

(30) Priority: 17.03.2006 JP 2006074440
(71) Applicant: NTT DoCoMo, Inc., Chiyoda-ku Tokyo 100-6150 (JP)
(72) Inventor: Mori, Shinichi, c/o NTT DoCoMo, Inc., Chiyoda-ku Tokyo 1006150 (JP); Ohya, Tomoyuki, c/o NTT DoCoMo, Inc., Chiyoda-ku Tokyo 1006150 (JP); Sugiyama, Takatoshi, c/o NTT DoCoMo, Inc., Chiyoda-ku Tokyo 1006150 (JP)
(74) Representative: Maury, Richard Philip

(57) **Abstract**

A wireless communications system is disclosed. The wireless communications system includes a base station unit that is provided in a predetermined area and that is configured to perform wireless communications with at least one mobile station; and at least one measurement unit that is provided in the predetermined area and that is configured to communicate with the base station unit. The measurement unit includes: a unit configured to receive at least a common control channel transmitted from the base station unit; a unit configured to measure a wireless channel status; and a unit configured to report a measurement result to the base station unit. In the wireless communications system, the base station unit adjusts a downlink wireless parameter according to the measurement result reported from the measurement unit.

## Description

### BACKGROUND OF THE INVENTION

### 1. Field of the Invention

The present invention generally relates to a technical field of wireless communications. More particularly, the present invention relates to a wireless communications system, a base station, a measurement apparatus and a wireless parameter control method.

### 2. Description of the Related Art

Designing of a service area of a cellular mobile communications system is performed based on various simulations, and evaluation and management for signal quality and communication capacity and the like are required after installing a base station. These are generally complicated works.

For example, as to a wireless access scheme such as W-CDMA, a same frequency is used in adjacent cells so that communication quality and system capacity are improved, and that apparatuses, land, aggregated circuits, frequencies and the like are used efficiently. Accordingly, before constructing a base station, the service area and traffic are estimated, and downlink wireless parameters (transmission power level and the like, for example) are considered in addition to position and configuration of the base station.

Following documents relate to the technical field of the present invention. As to the above-mentioned technique, please refer to the non-patent document 1 and the non-patent document 2.
[Non-patent document 1] Hayashi et.al., 2000 IEICE general conference, B-5-81, "Study on transmission power distribution to downlink common control channel in W-CDMA", March, 2000.
[Non-patent document 2] Hayashi et.al. 2001 IEICE general conference, B-5-34 "W-CDMA area evaluation experiments using receive quality measurement system", March, 2001.
[Non-patent document 3] Imae et.al. NTTDoCoMo technical journal, Vol.10, No.4 "W-IMPACT - IMCS base station design support tool for W-CDMA", January, 2003.
[Non-patent document 4] Mori et.al. 2005 IEICE general conference, B-5-8 "WCDMA wireless cell autonomous forming method by common pilot power control", March, 2005.
[Non-patent document 5] Mori et.al. 2005 IEICE society conference, B-5-106 "Wireless cell autonomous forming method by common pilot power control using adjacent cell status", September, 2005.

Cell system design and evaluation are necessary in a service area irrespective of indoor use or outdoor use. In a conventional wireless network configuration, it is usual that a base station installed outdoors forms a service area collectively covering a road area and an indoor area and the like. The wireless parameters are designed by verifying and evaluating signals on a road, and building penetration loss is considered. In an indoor point where radio waves transmitted by an outdoor base station do not reach, a service area is provided by installing a small base station by a carrier. A subway platform, an inner place in an large office building, an underground mall and the like are examples of the indoor point. The non-patent document 3, for example, discloses cell system design for such indoor area.

On the other hand, as to a future mobile communications system or wireless broadband system, the occupied bandwidth of the wireless access scheme is enlarged combined with increase of user throughput (transmission speed per user), so that a frequency higher than that currently used is also used. Therefore, a maximum cell radius decreases compared with a currently used radius due to factors that propagation loss including diffraction loss caused by features (building, land shape and the like) increases and that transmission power of the system is limited for satisfying safety requirement and the like. By the way, the diffraction loss includes loss caused when radio waves reach a vicinity of land surface from a roof of a building by diffraction.

Therefore, it becomes difficult to adopt the conventional method for deploying service areas using macro/micro cells in which antennas are installed in a planned way at a high place such as a steel tower, roof of a building, top of a mountain and the like.

In the future, service area deployment based on street microcells and indoor picocells may become mainstream in which the street microcells are cells formed by antennas installed densely at positions lower than a building, and the indoor picocells are cells formed by antennas installed in an indoor place. The service area deployment by introducing such small cells is effective in that propagation loss is overcome, user throughput and system capacity are improved, for example. However, the number of base stations largely increases, so that design and evaluation for the cells and the systems become complicated more than ever. Therefore, there is a possibility that conventionally performed network construction becomes difficult.

From this viewpoint, it is desirable to automatically follow feature changes occurring after a carrier places a base station based on system planning such that replacement of the base station is not necessary. Alternatively, a system is desired for adapting to surrounding environment so as to avoid interference in concert with surrounding base stations even when a carrier or a general user installs base stations in a haphazard way.

The non-patent documents 4 and 5, for example, disclose a wireless cell autonomous forming method in which, in the microcell environment, base stations form cells in an autonomous and distributed way by setting particular wireless parameters so that cell/system design and evaluation are simplified. In this method, the base station broadcast a common pilot channel that is one of common control channels to mobile stations in a cell, and each mobile station receives common pilot channels from surrounding base stations and measures received levels. When the mobile station moves between cells or moves over a border between a service area or an outside of the service area, the mobile station reports, to a connecting base station, ratio of chip energy to noise power density (Ec/(Io+No)) for a cell for which the received level is the strongest. Each base station stores a predetermined number of newest (Ec/(Io+No)) values reported from mobile stations to compare each value with a required value. If the ratio of the reported values that is equal to or less than the required value is less than a specified value, it is determined that the coverage of the cell formed by the base station is "good", but if not, it is determined that the coverage is "deteriorated". In addition, information of downlink wireless load (downlink total transmission power) are exchanged among base stations. If an average value of the downlink wireless load of the particular base station is equal to or greater than each average value of wireless load of other base stations of adjacent cells, it is determined that the downlink wireless load of the particular base station is "high degree", and if not, it is determined that the downlink wireless load is "low degree".

In addition, information of uplink wireless load of base stations are exchanged among base stations. The uplink wireless load is represented as a decibel sum of transmission power of the common pilot channel and uplink interference amount. If an absolute value of a difference between an average value of the uplink wireless load of a particular base station and an average value of the uplink wireless load of other base station of the adjacent cell is equal to or greater than a threshold, it is determined that the uplink wireless load of the particular base station is "unbalanced", and if not, it is determined that the uplink wireless load of the particular base station is "balanced".

Then, according to the determination results for Ec/(Io+No), downlink wireless load and uplink wireless load, transmission power of the common pilot channel is increased or decreased. Increase or decrease of the transmission power may be performed based on the following method, for example.

If "balanced" & "good" & "high degree" is satisfied, the transmission power of the common pilot channel is decreased. If "balanced" & "good" & "low degree" is satisfied, the transmission power of the common pilot channel is not changed. If "balanced" & "degraded" & "high degree" is satisfied, the transmission power of the common pilot channel is decreased. If "balanced" & "degraded" & "low degree" is satisfied, the transmission power of the common pilot channel is increased. If "unbalanced" & "good/degraded" & "high degree" is satisfied and if "unbalanced" is being resolved, the transmission power of the common pilot channel is decreased. If "unbalanced" & "good/degraded" & "low degree" is satisfied and if "unbalanced" is being resolved, the transmission power of the common pilot channel is increased.

According to such criteria, the transmission power of the common pilot channel may be changed by a predetermined amount. Accordingly, a wide coverage state in which a cell wholly continues can be formed with the weakest transmission power possible. Since the transmission power of the common pilot channel decreases, interference decreases so that more power can be assigned to communication channels. Thus, capacity of the outdoor communications system can be improved while simplifying works for design and evaluation for the cell system.

However, circumstances are different as to the indoor picocell formed by a base station installed only for covering a particular mobile station in an indoor place. As to such a cell, it is required to surly cover a target area, and continuity of coverage with an adjacent cell is not necessarily required. For example, when sites of two houses are adjacent to each other, each of indoor picocell base stations installed in each house is required to form a picocell covering each house, and it is not required that a mobile station can perform hand-over at a border between the sites. Instead, from the viewpoint of system capacity and communication quality, it is desirable to avoid coverage continuity with an adjacent cell to decrease interference between cells. However, any method for properly answering such requirement does not appear to be found.

In the conventional wireless cell autonomous forming method, the mobile station measures the common control channel transmitted by base stations in surrounding cells. When the mobile station performs handover between cells or the mobile station goes from an outside of a service area to an inside of the service area, the mobile station reports a cell having the strongest receive quality (value of Ec/(Io+No), for example) to a base station, so that the base station determines whether coverage of a cell formed by the base station itself is "good" or "deteriorated". Therefore, when there is a gap of coverage between a cell and an adjacent cell, it is always determined to be "deteriorated" in the vicinity of the gap. As a result, the transmission power of the common control channel is increased to keep continuity between the cell and the adjacent cell.

Such power control is proper for an outdoor communications environment in which it is required that a mobile station performs handover between cells without interruption. However, in an indoor communications environment for covering only particular mobile stations, the transmission power of the common control channel is set to be excessively large, so that interference to other channels and to other cells becomes excessively large. As a result, transmission power to be assigned to communication channels decreases so that system capacity and communication quality decrease.

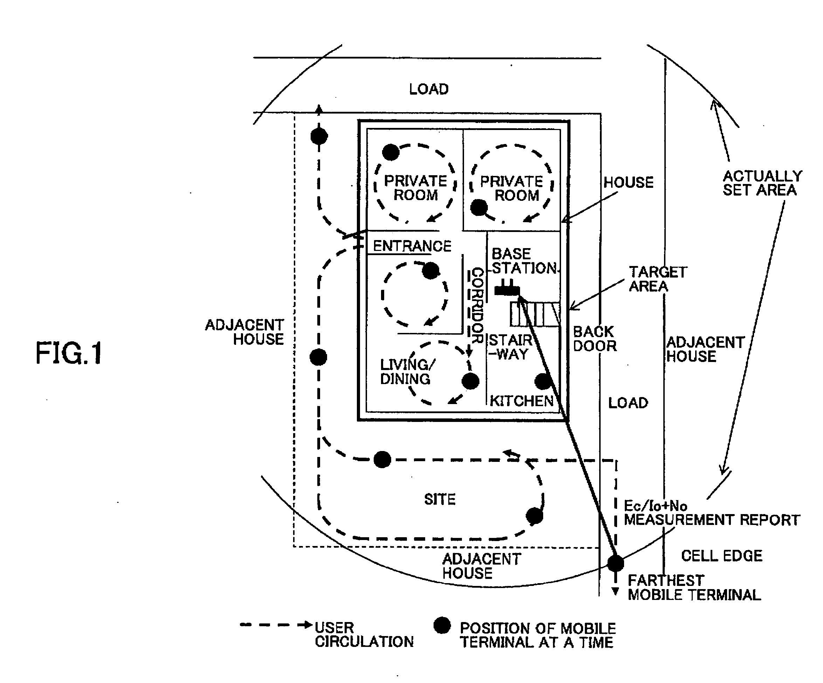

Fig.1 shows a state of a picocell in an indoor place. In the state shown in Fig.1, excessively large transmission power of the common control channel is set for a target covering area. As mentioned above, this kind of base station is installed for the purpose of covering particular mobile stations (for residents and the like) that dwells in a house (ordinary house and the like). More particularly, it is required to properly cover a rectangle area in a site (especially in an indoor area).

However, in a conventional wireless cell autonomous forming method, when a mobile terminal exists at a place far from the base station (at a place indicated as "farthest mobile terminal" in the figure), the transmission power is increased such that signals can properly reach the whole area having a large radius as shown in the figure so as to keep sufficient signal quality at the place of the farthest mobile terminal.

Accordingly, in the conventional method, when a mobile station moves from an inside edge of a coverage (inside of service area) to an outside of the service area, or when the mobile station moves from an outside edge of the coverage (outside of service area) to the inside of the service area, the mobile station reports a low Ec/(Io+No) value to the base station so that the transmission power of the common control channel is increased in response that the coverage is determined to be "deteriorated". Such a control continues until the transmission power of the common control channel reaches its maximum value or until the low Ec/(Io+No) value is not reported. Therefore, it is inhibited to surly cover the target area and to keep the system capacity and the communication quality to be high.

### SUMMARY OF THE INVENTION

The present invention is contrived for solving at least one of the above-mentioned problems, and an object of the present invention is to avoiding that a wireless cell enlarges more than necessary in a wireless communications system in which a downlink wireless parameter is autonomously adjusted according to environmental change of a surrounding area of a wireless base station.

The object is archived by a wireless communications system including:
a base station unit that is provided in a predetermined area and that is configured to perform wireless communications with at least one mobile station; and
at least one measurement unit that is provided in the predetermined area and that is configured to communicate with the base station unit;
the measurement unit comprising:
a unit configured to receive at least a common control channel transmitted from the base station unit;
a unit configured to measure a wireless channel status; and
a unit configured to report a measurement result to the base station unit,
wherein the base station unit adjusts a downlink wireless parameter according to the measurement result reported from the measurement unit.

According to the present invention, it can be avoided that a wireless cell enlarges more than necessary in a wireless communications system in which a downlink wireless parameter is autonomously adjusted according to environmental change of a surrounding area of a wireless base station.

### BRIEF DESCRIPTION OF THE DRAWINGS

Other objects, features and advantages of the present invention will become more apparent from the following detailed description when read in conjunction with the accompanying drawings, in which:
Fig.1 shows a state of an indoor picocell;
Fig.2 shows a wireless communications system according to a first embodiment of the present invention;
Fig.3 shows some components shown in Fig.2 more concretely.
Fig.4 shows a functional block diagram of the base station and the area measurement apparatus;
Fig.5A shows a case in which a usable frequency is determined based on received power when the base station launches, and Fig.5B shows the procedure for determining the frequency;
Fig.6A shows a case in which a usable frequency is determined based on noise power when the base station launches, and Fig.6B shows the procedure for determining the frequency;
Fig.7A shows a case in which transmission power is determined based on each measurement value after the base station launches, and Fig.7B shows the procedure for determining the transmission power;
Fig.8 shows a wireless communications system according to the second embodiment of the present invention in which a power line is used;
Fig.9 shows some parts of the wireless communications system in detail;
Fig.10 shows a wireless communications system according to the third embodiment of the present invention in which infrared rays are used;
Fig.11 shows some parts of the wireless communications system in detail;
Fig.12 shows a wireless communications system according to the fourth embodiment of the present invention in which weak radio wave is used;
Fig.13 shows a wireless communications system according to the fifth embodiment of the present invention in which a mobile station is used as the area measurement apparatus;
Fig.14 shows a wireless communications system according to the sixth embodiment of the present invention in which a power line is used;
Fig.15 shows some parts of the wireless communications system in detail;
Fig.16 shows a wireless communications system according to the seventh embodiment of the present invention in which infrared rays are used; and
Fig.17 shows a wireless communications system according to the seventh embodiment of the present invention in which weak radio wave is used.

### DETAILED DESCRIPTION OF THE PREFERRED EMBODIMENTS

According to an embodiment of the present invention, a measurement apparatus that is configured to communicate with a base station in a wireless communications system and that is provided in a cell of the base station is described. The measurement apparatus receives at least a common control channel transmitted from the base station, measures a wireless channel status, and reports a measurement result to the base station, so that the base station adjusts a downlink wireless parameter according to the measurement result. According to the embodiment, different from outdoor communication environment, the downlink wireless parameter is adjusted according to the measured value measured by the measurement apparatus provided in a predetermined place. Thus, a proper coverage can be kept uninfluenced by improper channel status reported by the mobile station.

The common control channel may be a common pilot channel, a broadcast channel or a beacon.

The wireless channel status may be represented as received power (RSCP) of the common control channel or a ratio of desired signal power to non-desired signal power of the common control channel.

The measurement apparatus may be connected to the base station via interior wiring, and the measurement apparatus may be connected to the base station via a power line. In addition, the measurement apparatus may be supplied with power via the power line to receive the common control channel, measure the wireless channel status and report the measurement result. Also, an infrared signal may be used for the measurement apparatus to communicate with the base station.

In the following, embodiments of the present invention are described. Classification of the embodiments is merely for the sake of explanation, and combination of more than one embodiments can be used as necessary.

### [First embodiment]

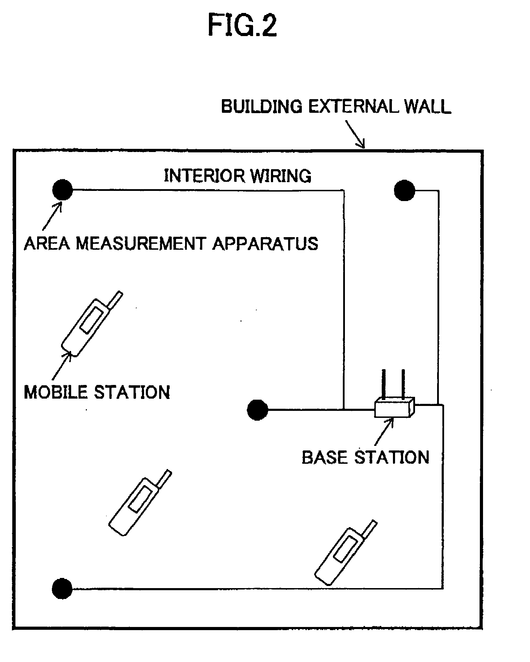

Fig.2 shows a wireless communications system according to a first embodiment of the present invention. The wireless communications system is provided for supporting particular mobile stations in an indoor picocell in an indoor place surrounded by building external walls. The wireless communications system includes at least one mobile station, a base station communicating with the mobile station by wireless, and at least one area measurement apparatus connected to the base station and being able to communicating with the base station.

Each area measurement apparatus measures receive quality of the common control channel and reports a measurement result to the base station. The common control channel may include a downlink common pilot channel and a broadcast (annunciation) channel and the like. Typically, the downlink common pilot channel is used for level measurement. The common control channel may be called a beacon.

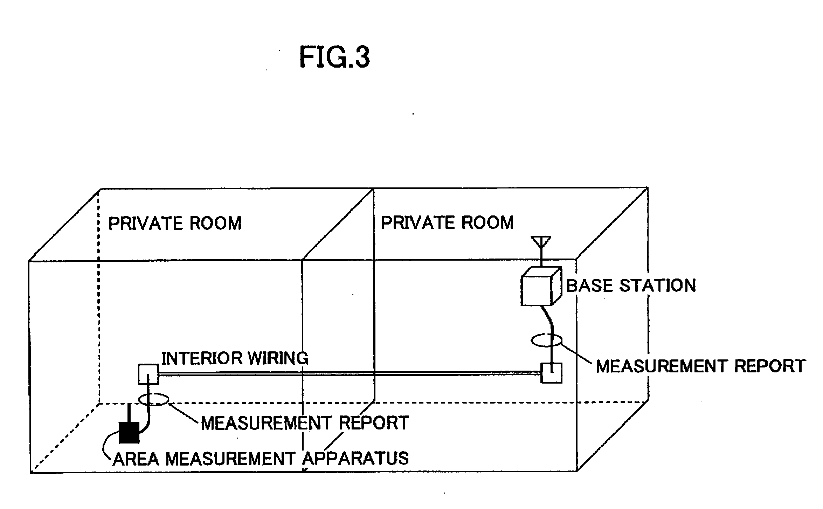

Fig.3 shows some components shown in Fig.2 more concretely. The base station and the area measurement apparatus are connected by interior wiring. Although it is not essential, the area measurement apparatus is provided fixedly. It is desirable that the area measurement apparatus is placed in a place near which the particular mobile station that should be supported by this system comes, or in a place (circulation) where the user often passes through or the like, and it is desirable that the place is determined in consideration of behavior pattern of the user in the indoor cell. The area measurement apparatus is not placed in an outside of the house that is not a subject to be covered by this system.

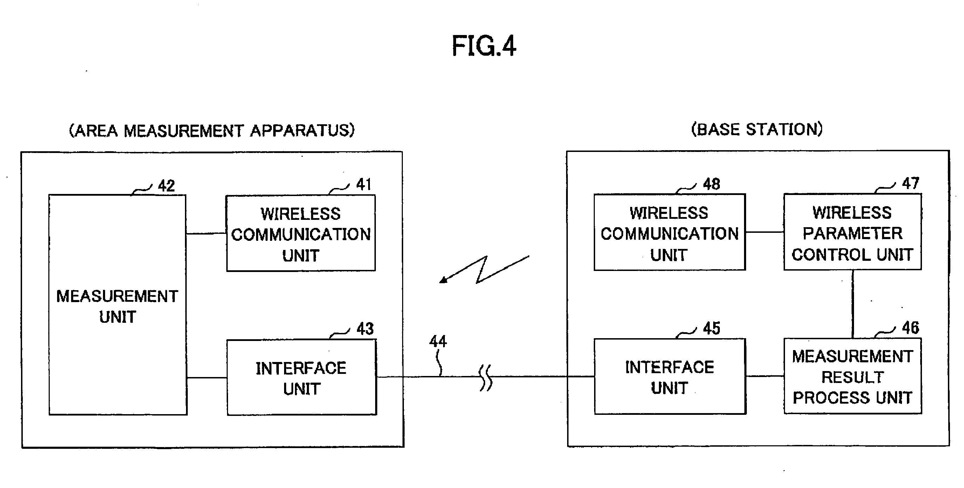

Fig.4 shows a functional block diagram of the base station and the area measurement apparatus. As shown in Fig.4, the area measurement apparatus includes a wireless communication unit 41, a measuring unit 42 and an interface unit 43. The base station includes an interface unit 45, a measurement result processing unit 46, a wireless parameter control unit 47 and a wireless communication unit 48.

The wireless communication unit 41 in the area measurement apparatus receives the common control channel transmitted from the base station.

The measuring unit 42 measures receive quality of the received common control channel. The receive quality may be represented as an amount indicating some sort of wireless channel status. For example, the receive quality may be evaluated by received power (RSCP: Received Signal Code Power), signal power to noise power ratio (SINR: Signal to Interference-plus-Noise Ratio), carrier power to noise power ratio (CINR: Carrier to Interference-plus-Noise Ratio), chip energy to noise power density ratio (Ec/(Io+No)), propagation loss (L) and the like.

The interface 43 is an interface for report a measurement value to the base station. The interface 43 may report the measurement value to the base station without converting a signal format of the measurement value, or the interface 43 may include a function for converting the signal format. In the latter case, the measurement value may be converted into a wireless signal to be transmitted as mentioned later, or the signal may be transmitted over the interior wiring 44. The interface 45 of the base station receives a measurement value reported from the area measurement apparatus.

As shown in Fig.2, a plurality of area measurement apparatuses are connected to the base station. The measurement result processing unit 46 statistically processes measurement results reported from the plurality of area measurement apparatuses, and the measurement result processing unit 46 reports the processed result to the wireless parameter control unit 47.

The wireless parameter control unit 47 determines how the wireless parameter of the common control channel should be adjusted based on the reported process result.

The wireless communication unit 48 sends a downlink channel according to determination results of the wireless parameter control unit 47.

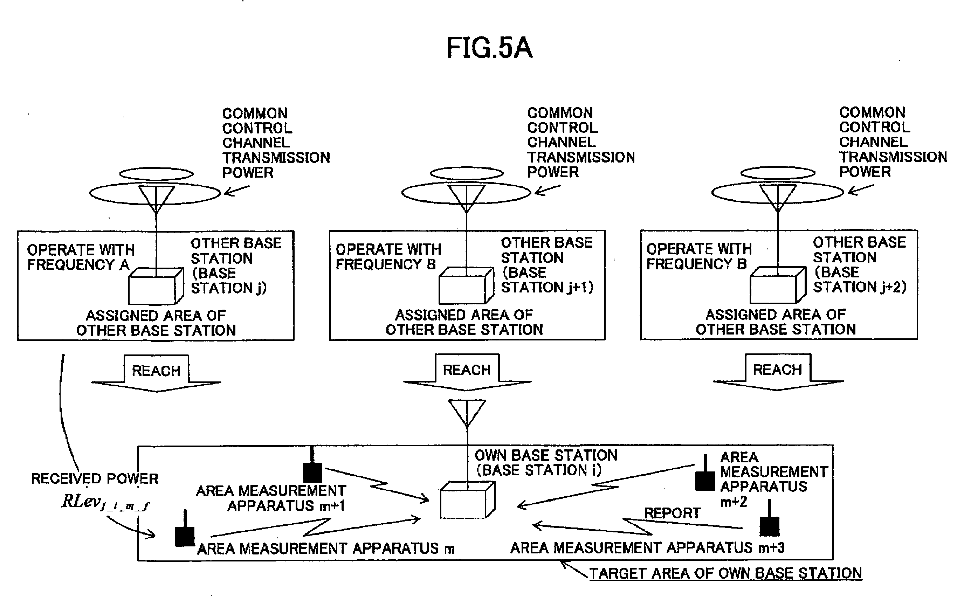

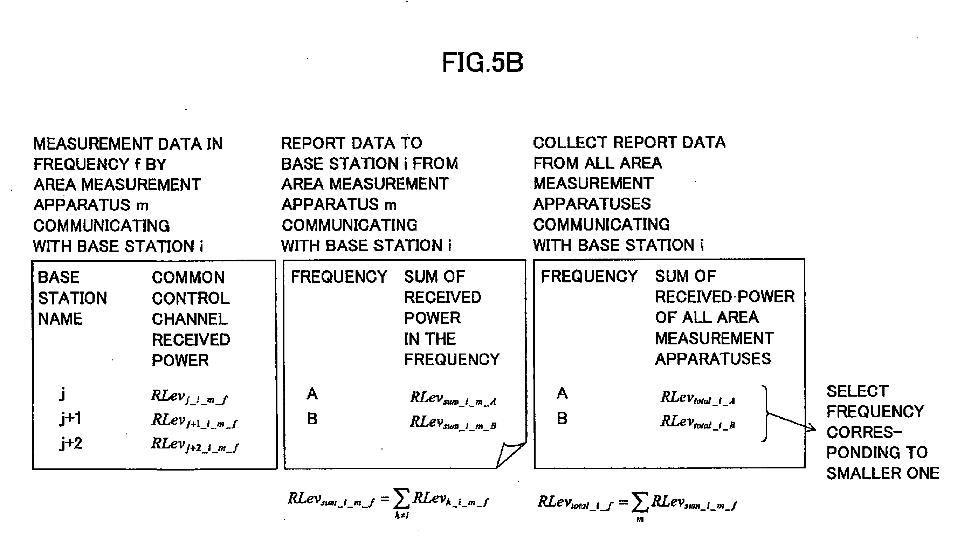

In the following, operation is described with reference to Figs.5-7. First, a determination method for determining usable frequencies when launching the base station is described.

It is assumed that, at a time before launching a base station i (own base station), a surrounding base station j uses a frequency A, and other surrounding base stations j+1 and j+2 use a frequency B respectively. At this time point, the base station i does not send the common control channel. Therefore, each of area measurement apparatuses m, m+1, m+2, m+3,... connected to the own base station receives common control channels from surrounding base stations to measure receive quality.

In the case shown in Figs.5A and 5B, the receive quality is represented as received power RLevj_i_m_f, wherein i and j indicate a base station respectively, m indicates an area measurement apparatus, and f indicates a frequency.

The area measurement apparatus measures the receive quality while changing the frequency (or while sweeping a specific frequency range). Since a plurality of base stations may use a same frequency (a same frequency B is used by the base stations j+1 and j+2 in the example shown in the figure), a true value of the measurement value (received power) is added for each frequency so that the total sum RLev_sum_i_m_f becomes a measurement value to be reported.

The measurement value measured by each area measurement apparatus is reported to the base station for each frequency. For each frequency, the base station calculates sum of true values of the received power of the plurality of area measurement apparatuses to obtain a total received power RLevtotal_i_f for each frequency. A frequency usable by the own base station i is a frequency for which the total received power RLevtotal_i_f is the smallest. Accordingly, a frequency by which interference is small can be easily found.

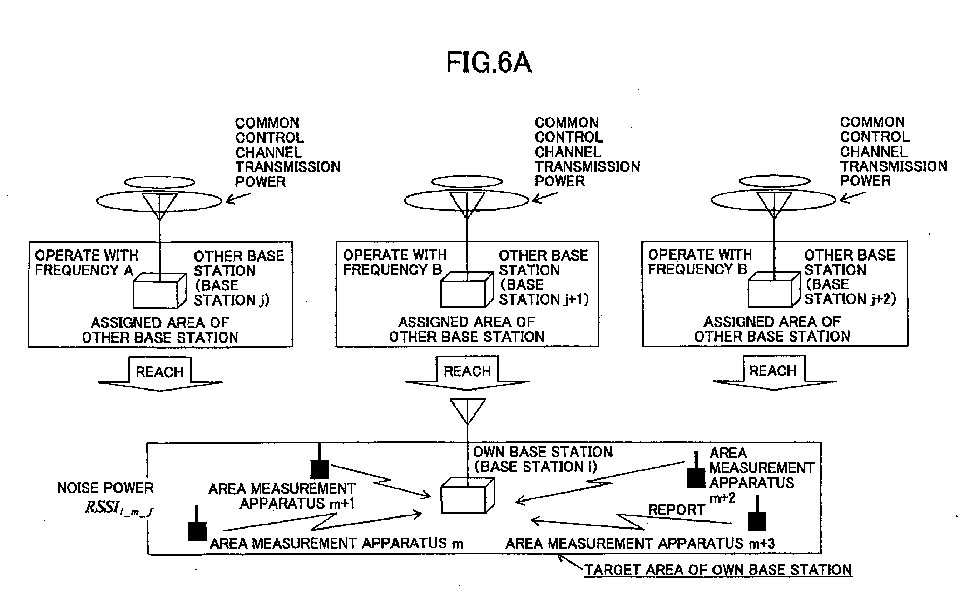

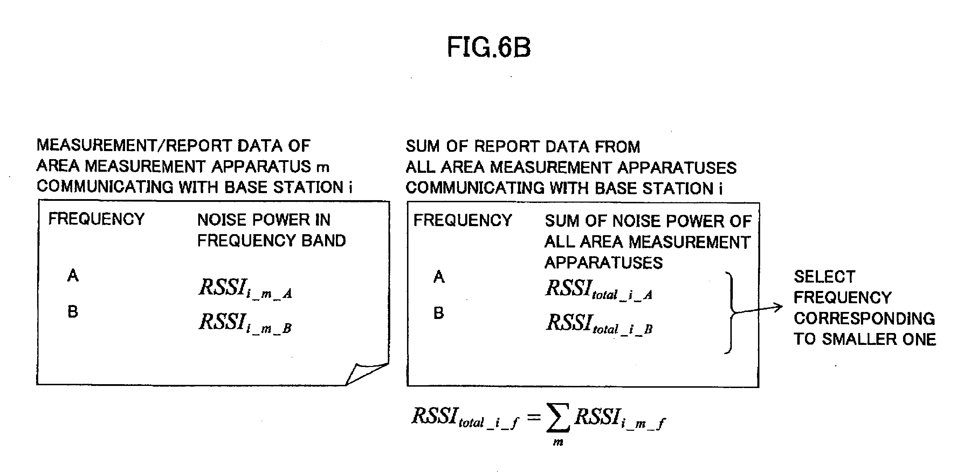

Figs.6A and 6B show a case in which noise power RSSIi_m_f is used as an amount for evaluating the receive quality of the common control channel. Each area measurement apparatus receives the common control channel from surrounding base stations to measure noise power. True values of the noise power are added for each frequency, and the total of the true values is reported to the own base station. The base station calculates sum of the totals of the true values from area measurement apparatuses for each frequency to calculate total noise power RSSItotal_i_f. A frequency usable by the own base station is a frequency for which the total noise power RSSItotal_i_f is the minimum. Also, according to this method, a frequency by which interference is small can be found easily.

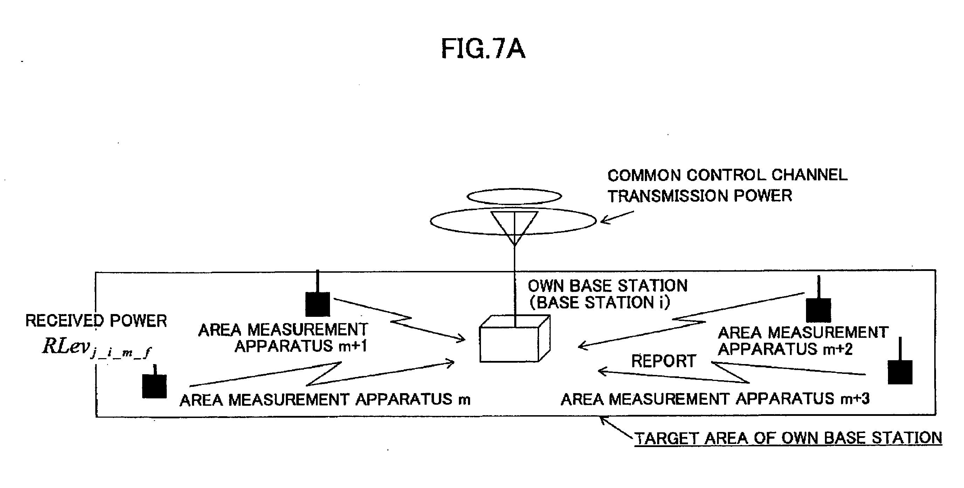

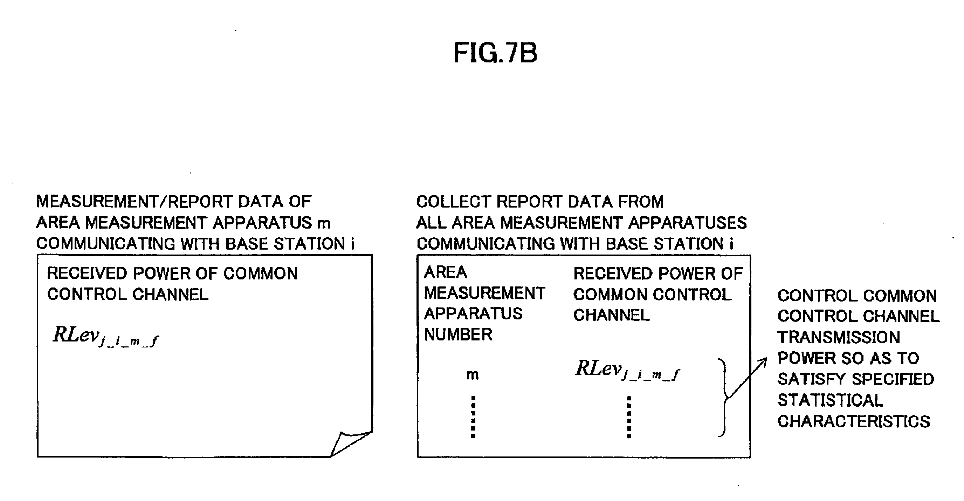

After the base station i determines the usable frequency, the base station i starts to transmit the common control channel and to provide a communication service. As shown in Figs.7A and 7B, each area measurement apparatus receives the common control channel transmitted from the base station i, and measures the receive quality (received power in this case) RLevj_i_m_f to report the receive quality to the base station. The measurement and the report may be performed periodically or irregularly.

The base station i collects received power report values of the common control channel of the base station i from all area measurement apparatus that are currently being connected and calculates a statistical value so as to control wireless parameters (transmission power of the common control channel especially) such that the statistical value such as a minimum value, an average value or a cumulative probability or the like of the receives power becomes a specified value.

For example, transmission power is periodically adjusted such that received power of an area measurement apparatus that reports a minimum received power (out of a range of the specified value) of the common control channel falls within the range of the specified value.

As mentioned above, although the area measurement apparatus is provided in accordance with behavior pattern of a user in the house, it is general that communication environment surrounding the area measurement apparatus is not temporally constant. For example, relatively many users reside in a dining room in a house from the evening to late into the night so that radio waves may become difficult to reach the area measurement apparatus, but radio waves may easily reach the area measurement apparatus in other hours. In addition, the communication environment may change in a situation in which position of a wall in a house changes. Accordingly, there are various triggers to change the communication situations, and the present embodiment is configured such that a proper (minimum range) coverage is realized according to the communication situations.

By the way, even if the transmission power of the common control channel is set to be maximum, when the received power of the area measurement apparatus is below the specified value, a service provided by the base station may be stopped temporarily so that the frequency to be used may be changed.

### [Second embodiment]

In the first embodiment, the base station is connected to the area measurement apparatuses via some sort of interior wiring. The interior wiring may be specifically provided for the area measurement apparatuses, or existing wiring may be used for the area measurement apparatuses. In the second embodiment of the present invention, the base station is connected to each area measurement apparatus using a power line in a house.

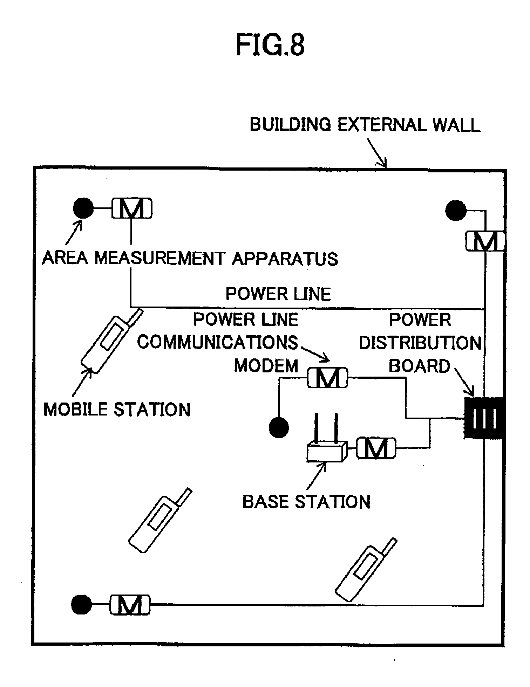

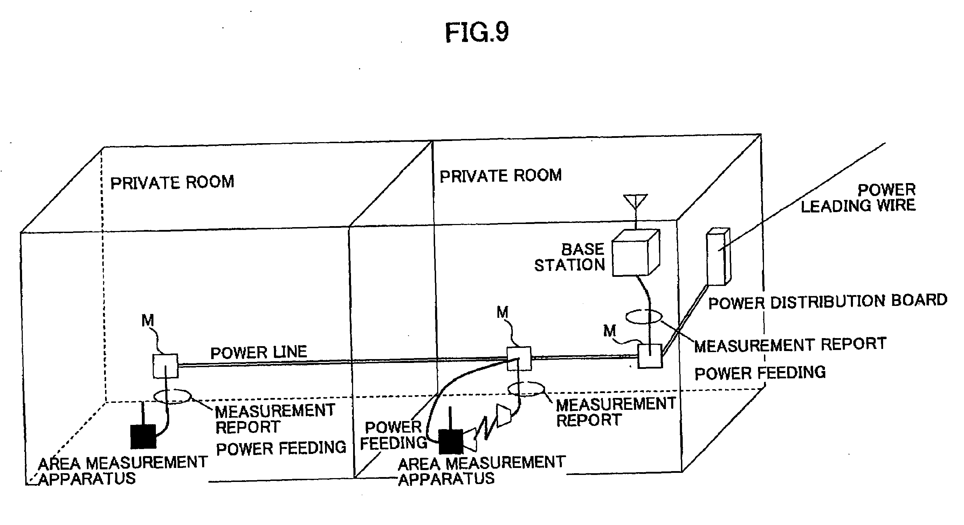

Fig.8 shows a wireless communications system according to the second embodiment of the present invention. Fig.9 shows some parts of the wireless communications system in detail. Also in this embodiment, the wireless communications system includes at least one mobile station, a base station communicating with the mobile station, and area measurement apparatuses connected to the base station. In this embodiment, the base station and the area measurement apparatuses are connected via power lines so that each area measurement apparatus is connected to a power line via a power line communications modem (indicated as "M" in the figure). Also the base station is connected to a power line via a power line communications modem. Power lines are connected to a power distribution board as necessary.

In this embodiment, each area measurement apparatus receives the common control channel, measures receive quality, and transfers the measurement value to the power line communications modem. The power line communications modem is a modem for performing power line communications. The measurement value transferred to the power line communications modem is modulated to a signal that can be transmitted over the power line and is transmitted. A proper destination (base station i, for example) is added to this signal. When the area measurement apparatus receives the common control channel from a plurality of base stations, the area measurement apparatus can also report the measurement value to each of the plurality of base stations. The signal transmitted over the power line can be received and analyzed by all power line communication modems that correspond to a same power distribution board.

A power line communications modem connected to a communication node designated as the destination (the power line communications modem connected to the base station i in this example) captures a signal addressed to the own node. Accordingly, the base station can receive the report of the received level from the area measurement apparatuses via the power lines. After that, the base station performs operation as described before.

According to the present embodiment, since the power line that is widely used as interior wiring is used, the base station and the area measurement apparatuses can be properly connected without preparing wiring separately.

### [Third embodiment]

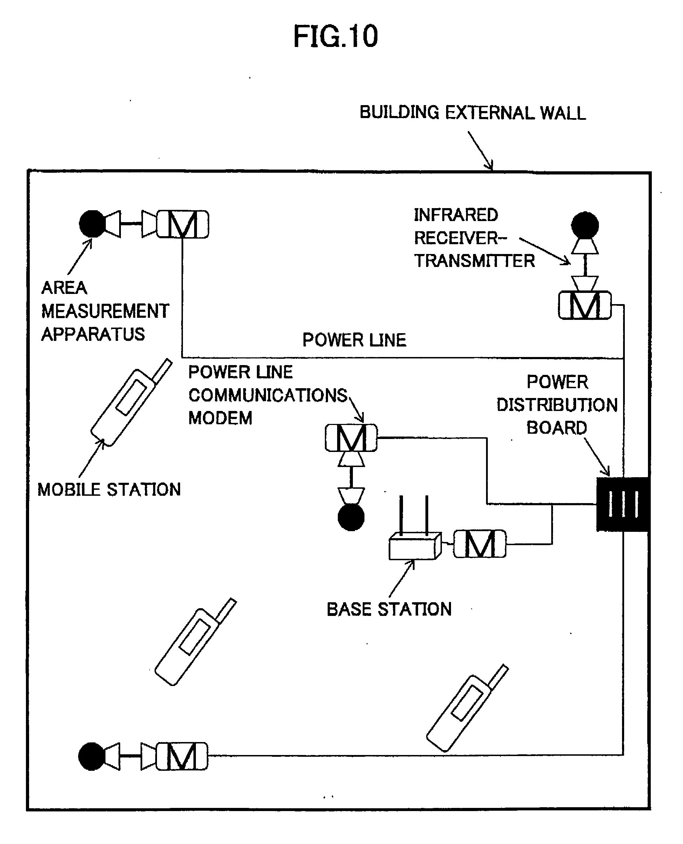

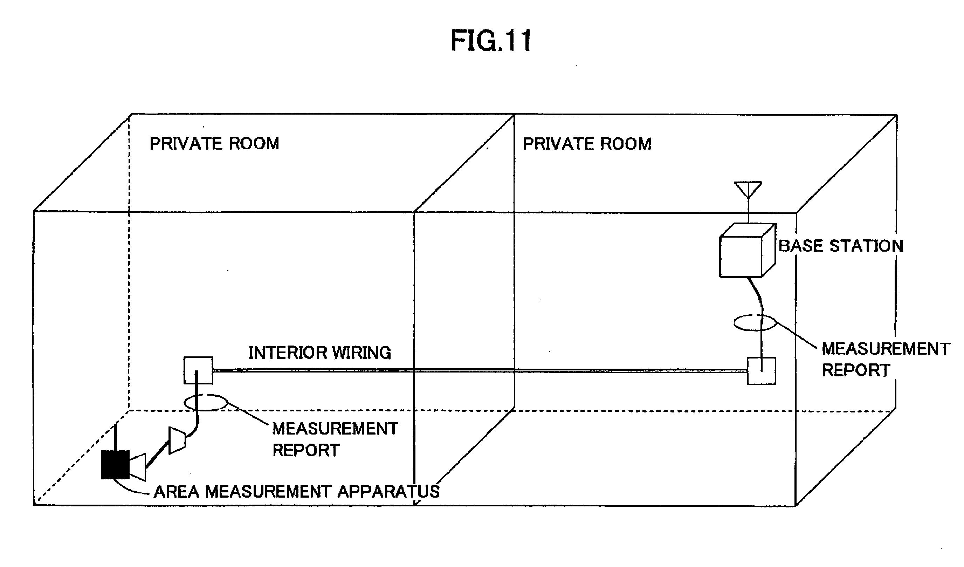

Fig.10 shows a wireless communications system according to the third embodiment of the present invention. Fig.11 shows some parts of the wireless communications system in detail. Also in this embodiment, the wireless communications system includes at least one mobile station, a base station communicating with the mobile station by wireless, and area measurement apparatuses connected to the base station. Also in this embodiment, the base station and the area measurement apparatuses are connected via power lines so that each area measurement apparatus is connected to a power line via a power line communications modem (M). The power lines are connected to the power distribution board as necessary.

In this embodiment, communications between the area measurement apparatus and the power line communications modem are performed by infrared communication. Therefore, an infrared transmitter is provided in the area measurement apparatus, and an infrared receiver is provided in the power line communications modem.

In this embodiment, the area measurement apparatus receives the common control channel, measures receive quality, and generates and transmits an infrared signal including the measurement value. The power line communications modem receives the infrared signal, and properly modulates the signal including the measurement value and transmits the signal. A proper destination (base station i, for example) is added to this signal. The signal transmitted over a power line can be received and analyzed by all power line communications modems that correspond to a same power distribution board.

A power line communications modem connected to a communication node designated as the destination captures a signal addressed to the own node. Accordingly, the base station can receive the report of the receives level from the area measurement apparatus via the power line. After that, the base station performs operation as described before.

According to this embodiment, effects similar to those of the second embodiment can be also obtained. In addition to that, since communications between the area measurement apparatus and the power line communications modem are performed by infrared wireless communication, restrictions on placement of the area measurement apparatus can be eased to some extent as long as visibility of the area measurement apparatus is kept.

### [Fourth embodiment]

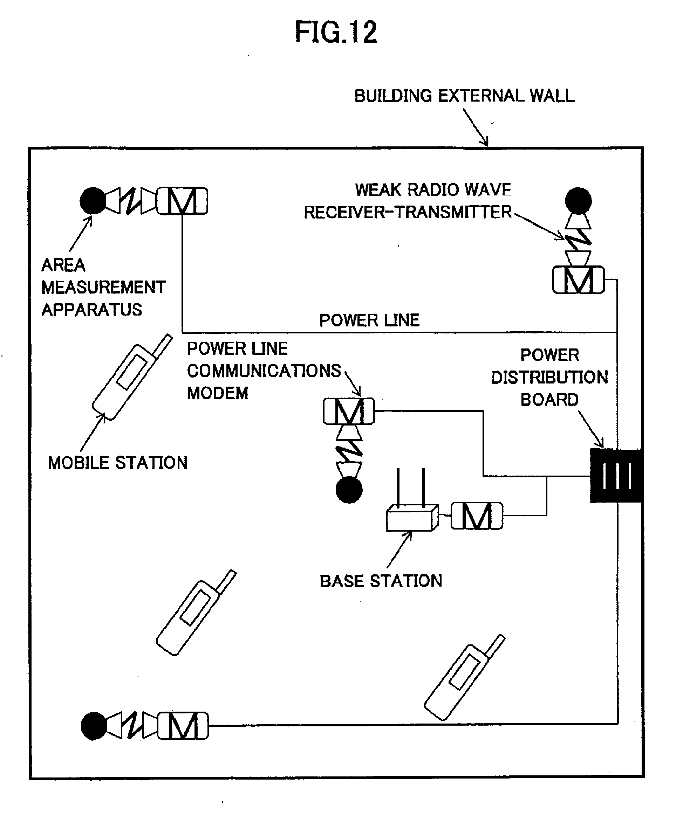

Fig.12 shows a wireless communications system according to the fourth embodiment of the present invention. Fig.9 (right side) also shows some parts of the wireless communications system in detail. Also in this embodiment, the wireless communications system includes at least one mobile station, a base station communicating with the mobile station by wireless, and area measurement apparatuses connected to the base station. Also in this embodiment, the base station and the area measurement apparatuses are connected via power lines so that each area measurement apparatus is connected to a power line via a power line communications modem (M). Also the base station is connected to a power line via a power line communications modem. The power lines are connected to the power distribution board as necessary.

In this embodiment, communications between the area measurement apparatus and the power line communications modem are performed using weak radio waves that distribute to various directions compared with the infrared rays. Therefore, the area measurement apparatus is provided with a transmitter of the weak radio waves, and the power line communications modem is provided with a receiver of the weak radio waves.

In this embodiment, the area measurement apparatus receives the common control channel, measures receive quality, and generates a weak radio wave signal including the measurement value and transmits the signal. The power line communications modem receives the weak radio wave signal, and properly modulates the signal including the measurement value and transmits the signal. A proper destination (base station i, for example) is added to this signal. The signal transmitted over a power line can be received and analyzed by all power line communications modems that correspond to a same power distribution board.

A power line communications modem connected to a communication node designated as the destination captures the signal addressed to the own node. Accordingly, the base station can receive the report of the received level from the area measurement apparatus via the power line. After that, the base station performs operation as described before.

According to this embodiment, effects similar to those of the second embodiment can be also obtained. In addition to that, since communications between the area measurement apparatus and the power line communications modem are performed by wireless communication using the weak radio wave signal, restrictions on placement of the area measurement apparatus can be largely eased. For example, different from the case of the third embodiment, the area measurement apparatus can be hidden behind an object.

### [Fifth embodiment]

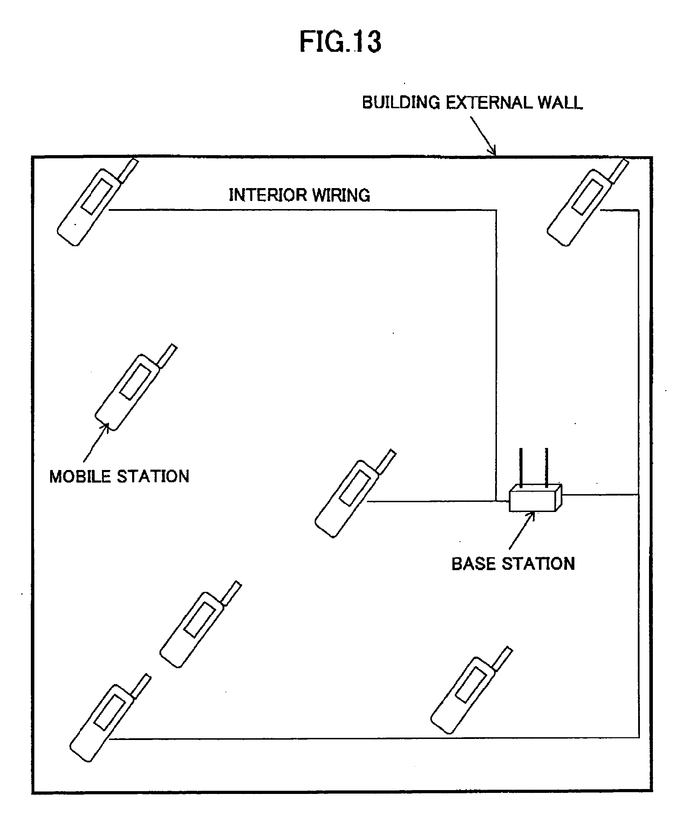

Fig.13 shows a wireless communications system according to the fifth embodiment of the present invention. The wireless communications system is provided for supporting particular mobile stations in an indoor picocell surrounded by external walls of a building. The wireless communications system includes at least one mobile station, a base station communicating with the mobile station by wireless, and area measurement apparatuses connected to the base station and being able to communicate with the base station. Each of the area measurement apparatus measures received level of the common control channel to report the measurement result to the base station.

In previous embodiments, the mobile station and the area measurement apparatus are provided separately. On the other hand, in this embodiment, the mobile station functions as an area measurement apparatus. In the figure, each mobile station that is not connected to the interior wiring performs normal wireless communications with the base station. Each mobile station connected to the interior wiring functions as an area measurement apparatus. The mobile station is provided with a function for measuring receive quality of the common control channel and reporting it.

Therefore, the base station may instruct the mobile station to report the measurement value using an instruction flag in the common control channel. Alternatively, the base station may instruct it to the mobile station via the interior wiring. This embodiment is preferable from the viewpoints that it is not necessary to separately prepare the area measurement apparatus or that the number of area measurement apparatuses that should be prepared separately can be decreased.

### [Sixth embodiment]

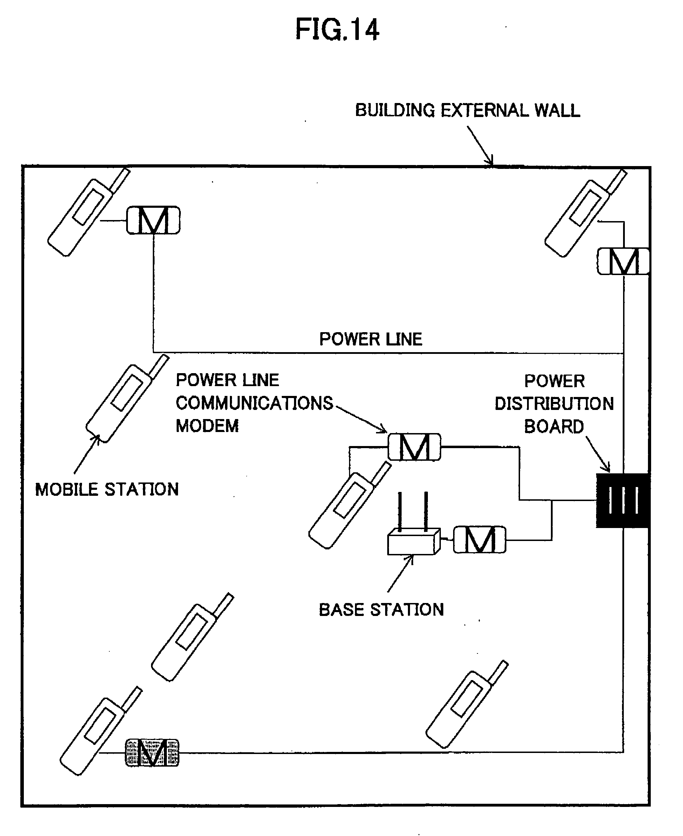

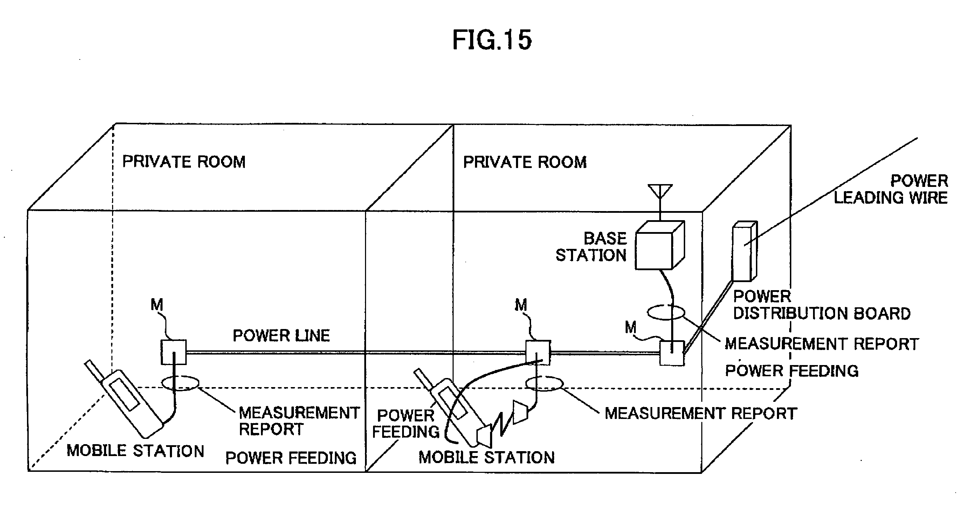

Fig.14 shows a wireless communications system according to the sixth embodiment of the present invention. Fig.15 (left side) shows some parts of the wireless communications system in detail. In this embodiment, the base station and (mobile stations function as) the area measurement apparatuses are connected via power lines so that each mobile station is connected to a power line via a power carrier communications modem ("M"). Also the base station is connected to a power line via a power carrier communications modem. The power line is connected to the power distribution board as necessary. Generally, operation of this embodiment is the same as that of the second embodiment except that the mobile station, instead of the area measurement apparatus, receives the common control channel, measures the receive quality, calculates the measurement value, and performs processes on transmission of the measurement value.

Generally, the mobile station requires power charging, and there is a high possibility that a user resides in a place where charging is performed for a relatively long time. In this embodiment, the mobile station is configured to report the receive quality of the common control channel to the base station via the power line while charging. Accordingly, a coverage for which residing time is long (space in which communication demand is high) can be kept specially. In addition, by configuring the mobile station to add a mobile station ID to the measurement value to be reported to the base station, statistical processing can be performed by adding some sort of weight to measurement values from various mobile stations.

### [Seventh embodiment]

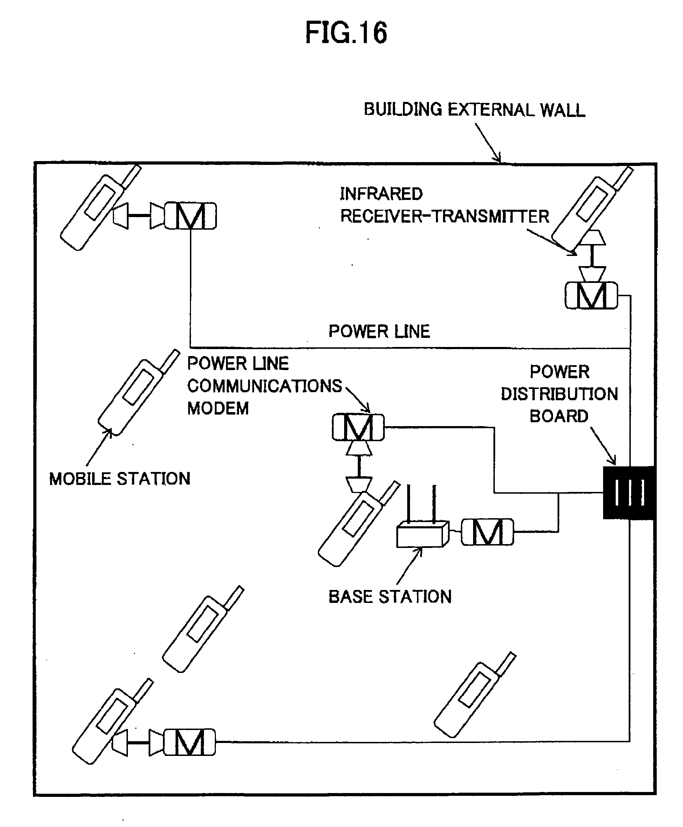

Fig.16 shows a wireless communications system according to the seventh embodiment of the present invention. Also in this embodiment, the base station and (mobile stations function as) the area measurement apparatuses are connected via power lines so that each mobile station used as an area measurement apparatus is connected to a power line via a power line communications modem (M). Also the base station is connected to a power line via a power line communications modem. The power line is connected to the power distribution board as necessary.

In this embodiment, communications between the mobile station functioning as the area measurement apparatus and the power line communications modem are performed by infrared communication. Generally, operation of this embodiment is the same as that of the third embodiment except that the mobile station, instead of the area measurement apparatus, receives the common control channel, measures the receive quality, calculates the measurement value, and performs processes on transmission of the measurement value.

### [Eighth embodiment]

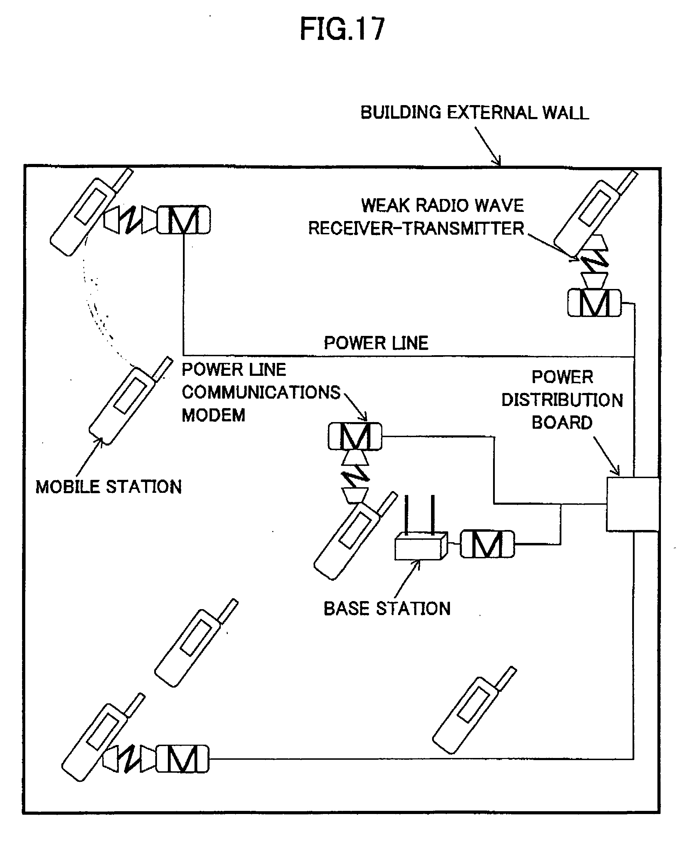

Fig.17 shows a wireless communications system according to the seventh embodiment of the present invention. Fig.15 (right side) shows some part of the wireless communications system in detail. Also in this embodiment, the base station and (mobile stations function as) the area measurement apparatuses are connected via power lines so that each mobile station used as an area measurement apparatus is connected to a power line via a power line communications modem (M). Also the base station is connected to a power line via a power line communications modem. The power line is connected to the power distribution board as necessary.

In this embodiment, communications between the mobile station functioning as the area measurement apparatus and the power line communications modem are performed by weak radio waves that distribute in various directions compared with the infrared rays. Generally, operation of this embodiment is the same as that of the fourth embodiment except that the mobile station, instead of the area measurement apparatus, receives the common control channel, measures the receive quality, calculates the measurement value, and performs processes on transmission of the measurement value.

The present invention is not limited to the specifically disclosed embodiments, and variations and modifications may be made without departing from the scope of the present invention.

The present application contains subject matter related to Japanese patent application No.2006-074440, filed in the JPO on March 17, 2006, the entire contents of which are incorporated herein by reference.

## Claims

1. A wireless communications system comprising:
a base station unit that is provided in a predetermined area and that is configured to perform wireless communications with at least one mobile station; and
at least one measurement unit that is provided in the predetermined area and that is configured to communicate with the base station unit;
the measurement unit comprising:
a unit configured to receive at least a common control channel transmitted from the base station unit;
a unit configured to measure a wireless channel status; and
a unit configured to report a measurement result to the base station unit,
wherein the base station unit adjusts a downlink wireless parameter according to the measurement result reported from the measurement unit.

2. A measurement apparatus that is configured to communicate with a base station in a wireless communications system and that is provided in a cell of the base station, the measurement apparatus comprising:
a unit configured to receive at least a common control channel transmitted from the base station;
a unit configured to measure a wireless channel status; and
a unit configured to report a measurement result to the base station,
wherein the measurement result reported to the base station is used for adjusting a downlink wireless parameter.

3. The measurement apparatus as claimed in claim 2, wherein the common control channel is a common pilot channel, a broadcast channel or a beacon.

4. The measurement apparatus as claimed in claim 2, wherein the wireless channel status is represented as received power of the common control channel or a ratio of desired signal power to non-desired signal power of the common control channel.

5. The measurement apparatus as claimed in claim 2, wherein the measurement apparatus is connected to the base station via interior wiring.

6. The measurement apparatus as claimed in claim 5, wherein the measurement apparatus is connected to the base station via a power line.

7. The measurement apparatus as claimed in claim 6, wherein the measurement apparatus is supplied with power via the power line to receive the common control channel, measure the wireless channel status and report the measurement result.

8. The measurement apparatus as claimed in claim 5, wherein an infrared signal is used for the measurement apparatus to communicate with the base station.

9. A base station communicating with at least one mobile station residing in a predetermined area, the base station comprising:
a unit configured to transmit a common control channel to unspecified mobile stations according to a wireless parameter;
a unit configured to receive a measurement result indicating receive quality of the common control channel from the measurement unit provided in the predetermined area; and
a unit configured to adjust a downlink wireless parameter according to the measurement result.

10. A wireless parameter control method used by a base station communicating with at least one mobile station residing in a predetermined area, the method comprising the steps of:
transmitting a common control channel to unspecified mobile stations according to a wireless parameter;
receiving a measurement result indicating receive quality of the common control channel from the measurement unit provided in the predetermined area; and
adjusting a downlink wireless parameter according to the measurement result.
